Europäisches Patentamt

European Patent Office

Office européen des brevets

(19)

(11) Publication number : **0 463 793 A2**

# (12) EUROPEAN PATENT APPLICATION

(21) Application number : **91305553.9**

(22) Date of filing : **19.06.91**

(51) Int. Cl.$^5$ : **C01B 33/34, C01B 25/36**

A request for addition of figure 3 has been filed pursuant to Rule 88 EPC. A decision on the request will be taken during the proceedings before the Examining Division (Guidelines for Examination in the EPO, A-V, 2.2).

(30) Priority : **26.06.90 US 543633**
**26.06.90 US 543634**

(43) Date of publication of application :
**02.01.92 Bulletin 92/01**

(84) Designated Contracting States :
**AT BE DE DK FR GB IT NL SE**

(71) Applicant : **MOBIL OIL CORPORATION**
**3225 Gallows Road**
**Fairfax, Virginia 22037-0001 (US)**

(72) Inventor : **Davis, Mark Edward**
**710 Cedarview Drive**
**Blacksburg, Virginia 24060 (US)**

(74) Representative : **Colmer, Stephen Gary et al**
**Patent Department c/o Mobil Services**
**Company Limited Mobil Court 3 Clements Inn**
**London WC2A 2EB (GB)**

(54) Synthesis of crystalline aluminophosphate composition.

(57) Crystalline aluminophosphate compositions having pore windows formed by 18 tetrahedral members and a pore size in excess of 10 Angstrom are prepared from a forming mixture containing sources of aluminum, phosphorus and optionally, silicon and/or at least one metal M, e.g. boron. The forming mixture further contains a directing agent comprising a mixture of quaternary nitrogen compound and amine in a molar ratio of 0.01 to 0.025. The resulting product exhibits greater stability than compositions made from an amine directing agent alone.

EP 0 463 793 A2

Jouve, 18, rue Saint-Denis, 75001 PARIS

This invention relates to the synthesis of porous crystalline aluminophosphate compositions having pore dimensions greater than 10 Angstroms.

PCT Publication No. WO 89/01912, published 9 March 1989, discloses the preparation of large pore crystalline aluminumphosphate compositions from forming mixtures containing structure-directing agents including dipropylamine, diisopropylamine, tetrapropylammonium hydroxide, tetrabutylammonium hydroxide, dipentylamine, tripentylamine, tributylamine, alkylammonium and alkylphosphonium compounds in general, and mixtures thereof. It has now been found that the thermal stability of the resultant aluminophosphate composition can be improved if the structure-directing agent is selected to be a mixture of at least one quaternary nitrogen compound and at least one amine within a closely defined molar ratio range.

Accordingly, the invention resides in a method for synthesizing a porous aluminophosphate composition having, after heating at 110°C, an X-ray diffraction pattern with lines shown in Table 1A of the specification, the method comprising forming an aqueous reaction mixture containing sources of aluminum oxide, phosphorus oxide, and a directing agent (DA) which contains at least one quaternary nitrogen compound and at least one amine in a molar ratio of total quaternary nitrogen compound to total amine ranging from 0.01 to 0.025, and which has a composition, in terms of mole ratios, within the following ranges:

$$P_2O_5/Al_2O_3 \quad 0.5 \text{ to } 1.25$$
$$H_2O/Al_2O_3 \quad 10 \text{ to } 100$$
$$DA/Al_2O_3 \quad 0.2 \text{ to } 1.5$$

and crystallizing the mixture to form said aluminophosphate composition.

The term "aluminophosphate" is used herein to include materials which include in their crystalline lattice, in addition to aluminum and phosphorus, silicon (referred to as silicoaluminophosphates) and/or other metals (referred to as metalloaluminophosphates or metallosilicoaluminophosphates).

The aluminophosphate composition resulting from the present method, even after being heated at 110°C, exhibits a characteristic X-ray diffraction pattern including the following values:

## TABLE 1A

| Interplanar d-Spacings (A) | Relative Intensity |
|---|---|
| 16.4 ± 0.2 | vs |
| 8.2 ± 0.1 | w |
| 4.74 ± 0.05 | w |

more preferably the following values:

## TABLE 1B

| Interplanar d-Spacings (A) | Relative Intensity |
|---|---|
| 16.4 ± 0.2 | vs |
| 8.2 ± 0.1 | w |
| 6.17 | |
| ± 0.05 | w |
| 6.21 | |
| 5.48 ± 0.05 | w |
| 4.74 ± 0.05 | w |

and most preferably the following values:

## TABLE 1C

| Interplanar d-Spacings (A) | | | Relative Intensity |
|---|---|---|---|
| 16.4 | ± | 0.2 | vs |
| 8.2 | ± | 0.1 | w |
| 6.17 | | | w |
| | ± | 0.05 | w |
| 6.21 | | | |
| 5.48 | ± | 0.05 | w |
| 4.74 | ± | 0.05 | w |
| 4.10 | ± | 0.04 | w |
| 4.05 | ± | 0.04 | w |
| 3.94 | | | w |
| | ± | 0.04 | w |
| 3.96 | | | |
| 3.76 | ± | 0.03 | w |
| 3.28 | ± | 0.03 | w |

The above X-ray diffraction data were collected with conventional X-ray systems, using copper K-alpha radiation. The positions of the peaks, expressed in degrees 2 theta, where theta is the Bragg angle, were determined by scanning 2 theta. The interplanar spacings, d, measured in Angstrom units (A), and the relative intensities of the lines, $I/I_o$, where $I_o$ is one-hundredth of the intensity of the strongest line, including subtraction of the background, were derived. The relative intensities are given in terms of the symbols vs = very strong (75-100%), s = strong (50-74%), m = medium (25-49%) and w = weak (0-24%).

The X-ray diffraction lines in Tables 1A, 1B and 1C identify a crystal framework topology in the composition exhibiting large pore windows of 18-membered ring size. The pores are at least 10 Angstroms in diameter, and typically are 12-13 Angstroms in diameter. It is noted that the X-ray pattern of the present composition is void of a d-spacing value at 13.6-13.1 Angstroms with any significant intensity relative the strongest d-spacing value. If a d-spacing value in this range appears in a sample of the present composition, it is due to impurity and will have a weak relative intensity.

After removal of the organic directing agent, and in the anhydrous state, the aluminophosphate composition synthesized by the present method has the following composition, assuming no additional metal(s) is present:

$$Al_2O_3:xP_2O_5$$

wherein x is 0.5 to 1.5, or the following composition if silicon is also present:

$$Al_2O_3:xP_2O_5:ySiO_2$$

wherein x is 0.5 to 1.5 and y is 0.01 to 0.5. If, however, additional metal(s) is present, the composition has the following composition:

$$(AlO_2^-)_{1-x}:(PO_2^+)_{1-y}:(Mo_2^{m-4})_{x+y}$$

wherein M is one or more elements of valence m (weighted average) selected from the group consisting of certain non-aluminum, non-phosphorus, non-silicon elements and combinations thereof with $Si^{+4}$, and wherein x and y are numbers which satisfy the relationship:

$$z = y-x+(4+m) (x+y)$$

wherein z is a number of from greater than -1 to less than +1. When z is greater than 0, the metalloaluminophosphate will mostly behave as a cation exchanger with potential use as an acidic catalyst. When z is less than 0, the metalloaluminophosphate will mostly behave as an anion exchanger with potential use as a basic catalyst. Generally, the number of atoms of aluminum and phosphorus is greater than the number of atoms of non-aluminum, non-phosphorus element plus any silicon, i.e. Al + P > M. Preferably, where M includes silicon, the silicon/other element ratio for M is from 0.0005 to less than 0.5. In one embodiment M is boron alone or silicon and boron.

The element M has an oxidation number of from +2 to +6, and an ionic "Radius Ratio" in the range of 0.15 to 0.73, with the proviso that when the oxidation number of M is +2, the Radius Ratio of the element M must be from 0.52 to 0.62.

The term "Radius Ratio" is defined as the ratio of the crystal ionic radius of the element M to the crystal ionic radius of the oxygen anion, $O^{-2}$.

$$\text{Radius Ratio} = \frac{\text{crystal ionic radius of element M}}{\text{crystal ionic radius of } O^{-2}}$$

The crystal ionic radii of elements are listed in the CRC Handbook of Chemistry and Physics, 61st edition, CRC Press, Inc., 1980, pages F-216 and F-217. In determining the Radius Ratio, it is necessary to use crystal ionic radii of the M atom and oxygen anion ($O^{-2}$) which have been measured by the same method. Non-limiting examples of element M useful herein include:

| M | Valence | Radius Ratio |
|---|---|---|
| As | +3 | 0.44 |
| B | +3 | 0.17 |
| Bi | +3 | 0.73 |
| Co | +2 | 0.55 |
| Cu | +2 | 0.54 |
| Fe | +2 | 0.56 |
| Fe | +3 | 0.48 |
| Ge | +2 | 0.55 |
| Ge | +4 | 0.40 |
| In | +3 | 0.61 |
| Mn | +2 | 0.61 |
| Sb | +3 | 0.57 |
| Sn | +4 | 0.54 |
| Ti | +3 | 0.58 |
| Ti | +4 | 0.52 |
| V | +3 | 0.56 |
| V | +4 | 0.48 |
| V | +5 | 0.45 |
| Zn | +2 | 0.56 |

Non-limiting example of elements not included as M of the present invention include:

| Element | Valence | Radius Ratio |
|---|---|---|
| B | +1 | 0.26 |
| Ba | +1 | 1.16 |
| Ba | +2 | 1.02 |
| Ce | +3 | 0.78 |
| Cd | +1 | 0.86 |
| Cd | +2 | 0.73 |
| Cr | +1 | 0.61 |
| Cr | +2 | 0.67 |
| Cu | +1 | 0.73 |
| La | +1 | 1.05 |
| Mg | +1 | 0.62 |
| Mg | +2 | 0.50 |
| Mo | +1 | 0.70 |
| Sn | +2 | 0.70 |
| Sr | +2 | 0.85 |
| Th | +4 | 0.77 |
| Ti | +1 | 0.73 |
| Ti | +2 | 0.71 |
| Zn | +1 | 0.67 |

4

As synthesized, in general, the crystalline composition comprises structural aluminum, phosphorus and element M, and will exhibit an M/(aluminum plus phosphorus) atomic ratio of less than unity and greater than zero, and usually within the range of from 0.001 to 0.99. The phosphorus/aluminum atomic ratio of such materials may be found to vary from 0.01 to 100.0, as synthesized.

The method of the invention comprises forming a reaction mixture hydrogel containing sources of aluminum oxide, phosphorus oxide, optionally silicon dioxide, directing agent (DA) which contains at least one quaternary nitrogen compound and at least one amine in a molar ratio of total quaternary nitrogen compound to total amine ranging from 0.01 to 0.025, and water and having a composition, in terms of mole ratios, within the following ranges:

|  | Broad | Preferred | Most Preferred |
|---|---|---|---|
| $SiO_2/Al_2O_3$ | 0 to 1 | 0 to 0.2 | 0 to 0.1 |
| $P_2O_5/Al_2O_3$ | 0.5 to 1.25 | 0.9 to 1.1 | 0.9 to 1.1 |
| $H_2O/Al_2O_3$ | 10 to 100 | 20 to 80 | 30 to 60 |
| $DA/Al_2O_3$ | 0.2 to 1.5 | 0.2 to 0.8 | 0.3 to 0.7 |

and maintaining the mixture until crystals of the desired crystalline composition are formed.

Where the the reaction mixture contains the element M, the mixture has a molar composition within the following ranges:

|  | Broad | Preferred | Most Preferred |
|---|---|---|---|
| $M/Al_2O_3$ | 0.01 to 0.4 | 0.01 to 0.2 | 0.01 to 0.1 |
| $P_2O_5/Al_2O_3$ | 0.5 to 1.25 | 0.9 to 1.1 | 0.9 to 1.1 |
| $H_2O/Al_2O_3$ | 10 to 100 | 30 to 80 | 35 to 60 |
| $DA/Al_2O_3$ | 0.5 to 1.5 | 0.9 to 1.1 | 0.9 to 1.1 |

The amine of the combined organic directing agent employed in the method of the invention may be a mono-, di-, tri- or polyamine. Particularly preferred amines include alkylamines wherein the alkyl group has 1 to 5 carbon atoms. Exemplary amines include di-n-propylamine, di-isopropylamine, di-n-pentylamine, di-isopentylamine, di-neopentylamine, tributylamine, tripentylamine and trialkanolamines, e.g., triethanolamine and tri-isopropanolamine.

The quaternary nitrogen compounds used in the organic directing agent of the present invention comprise ammonium compounds having the formula:

$$R_4N^+X^-$$

wherein R is alkyl of from 1 to 20 carbon atoms, heteroalkyl of from 1 to 20 atoms, aryl, heteroaryl, cycloalkyl of from 3 to 6 carbon atoms, cycloheteroalkyl of from 3 to 6 carbon atoms, or combinations thereof; and X is an anion (e.g., fluoride, chloride, bromide, iodide, hydroxide, acetate, sulfate, carboxylate, etc.). Preferred quaternary nitrogen compounds include those of the above formula wherein R is alkyl of from 1 to 4 carbon atoms and X is halide or hydroxide. Such quaternary nitrogen compounds include those wherein the cation is selected from the group consisting of tetramethylammonium, tetraethylammonium, tetra-n-propylammonium and tetra-n-butylammonium.

The molar ratio of quaternary nitrogen compound to amine ranges from 0.01 to 0.025, preferably from 0.01 to 0.015 when M is absent and 0.01 to 0.20 when M is present; even more preferably from 0.012 to 0.014 when M is absent and 0.015 to 0.018 when M is present. The present invention is particularly useful in that it results in the preparation of the above-mentioned stable crystalline compositions using reduced amounts of expensive quaternary nitrogen compounds while avoiding the instability associated with crystalline compositions prepared from a pure amine directing agent.

The synthesis of the present invention may be facilitated when the reaction mixture comprises at least 0.01%, preferably 0.10%, and even more preferably 1% (based on total weight) seed crystals, such as those having the structure of the product crystals.

Reaction conditions include heating the reaction mixture to a temperature of 100°C to less than 160°C for a period of time of from 1 to 80 hours. A more preferred temperature range is from 130 to 150°C with the amount of time at temperature being from 10 to 30 hours. If the temperature is 160°C or more, the product composition will be diminished in the desired large pore composition having the X-ray diffraction patterns of Tables 1A, 1B and 1C. Similarly, if the ratio $P_2O_5/Al_2O_3$ is greater than 1.25, especially when the temperature is 160°C or higher, product composition will be diminished in the desired large pore material.

The solid product composition comprising the desired aluminophosphate is recovered from the reaction medium, as by cooling the whole to room temperature, filtering and water washing.

The crystalline aluminophosphate composition synthesized in accordance with the present method exhibits utility as a catalyst component for a variety of chemical reactions, including cracking, hydrocracking, reforming, dewaxing, disproportionation, alkylation, isomerization and oxidation.

For example, employing a catalyst comprising the composition of this invention containing a hydrogenation component, reforming stocks can be reformed employing a temperature of 50 to 550°C, a pressure of 445 to 3550 kPa (50 to 500 psig), preferably 790 to 7620 kPa (100 to 300 psig), a liquid hourly space velocity of 0.1 to 10, preferably 1 to 4 and a hydrogen to hydrocarbon mole ratio of 1 to 10, preferably 1 to 5.

A catalyst comprising the present composition can also be used for hydroisomerization of normal paraffins, when provided with a hydrogenation component, e.g. platinum. Hydroisomerization is carried out at a temperature of 250°C to 450°C, preferably 300°C to 425°C, with a liquid hourly space velocity of 0.1 to 10, preferably 0.5 to 4, employing hydrogen such that the hydrogen to hydrocarbon mole ratio is between 1 and 10. Additionally, the catalyst can be used for olefin or aromatics isomerization employing temperatures between 0°C and 550°C.

A catalyst comprising the composition of this invention can also be used for reducing the pour point of gas oils. This process is carried out at a liquid hourly space velocity between 0.1 and 5 $hr^{-1}$ and a temperature between 300°C and 425°C.

Other reactions which can be accomplished employing a catalyst comprising the composition of this invention containing a metal, e.g. platinum, include hydrogenation-dehydrogenation reactions and desulfurization reactions, olefin polymerization (oligomerization), and other organic compound conversions such as the conversion of alcohols (e.g. methanol) to hydrocarbons.

As in the case of many catalysts, it may be desirable to incorporate the hereby prepared aluminophosphate with another material resistant to the temperatures and other conditions employed in certain organic conversion processes. Such matrix materials include active and inactive materials and synthetic or naturally occurring zeolites as well as inorganic materials such as clays, silica and/or metal oxides, e.g. alumina. The latter may be either naturally occurring or in the form of gelatinous precipitates, sols or gels including mixtures of silica and metal oxides. Use of a material in conjunction with the present aluminophosphate, i.e. combined therewith, which is active, may enhance the conversion and/or selectivity of the catalyst in certain organic conversion processes. Inactive materials suitably serve as diluents to control the amount of conversion in a given process so that products-can be obtained economically and orderly without employing other means for controlling the rate or reaction. Frequently, crystalline catalytic materials have been incorporated into naturally occurring clays, e.g. bentonite and kaolin. These materials, i.e. clays, oxides, etc., function, in part, as binders for the catalyst. It is desirable to provide a catalyst having good crush strength, because in a petroleum refinery the catalyst is often subjected to rough handling, which tends to break the catalyst down into powder-like materials which cause problems in processing.

Naturally occurring clays which can be composited with the hereby synthesized aluminophosphate include the montmorillonite and kaolin families which include the subbentonites, and the kaolins commonly known as Dixie, McNamee, Georgia and Florida clays, or others in which the main mineral constituent is halloysite, kaolinite, dickite, nacrite or anauxite. Such clays can be used in the raw state as originally mined or initially subjected to calcination, acid treatment or chemical modification.

In addition to the foregoing materials, the crystals hereby synthesized can be composited with a porous matrix material such as silica-alumina, silica-magnesia, silica-zirconia, silica-thoria, silica-beryllia, silica-titania, as well as ternary compositions such as silica-alumina-thoria, silica-alumina-zirconia, silica-alumina-magnesia and silica-magnesia-zirconia. The matrix can be in the form of a cogel. A mixture of these components could also be used.

The relative proportions of finely divided crystalline material and matrix vary widely with the crystalline material content ranging from 1 to 90 % by weight, and more usually 2 to 50 % by weight of the composite.

The invention will now be more particularly descibed with reference to the following examples aad the accompanying drawings, in which:

Figure 1 is the X-ray powder diffraction pattern of the product of Experiment K as-synthesized, without calcination.

Figure 2 is the X-ray powder diffraction pattern of the product of Experiment K after heating at 100°C for 4 days.

Figure 3 depicts the $^{11}$B NMR spectrum of a metalloaluminophosphate prepared from a forming mixture containing sources of silicon oxide and sources of boron oxide.

## EXAMPLE 1

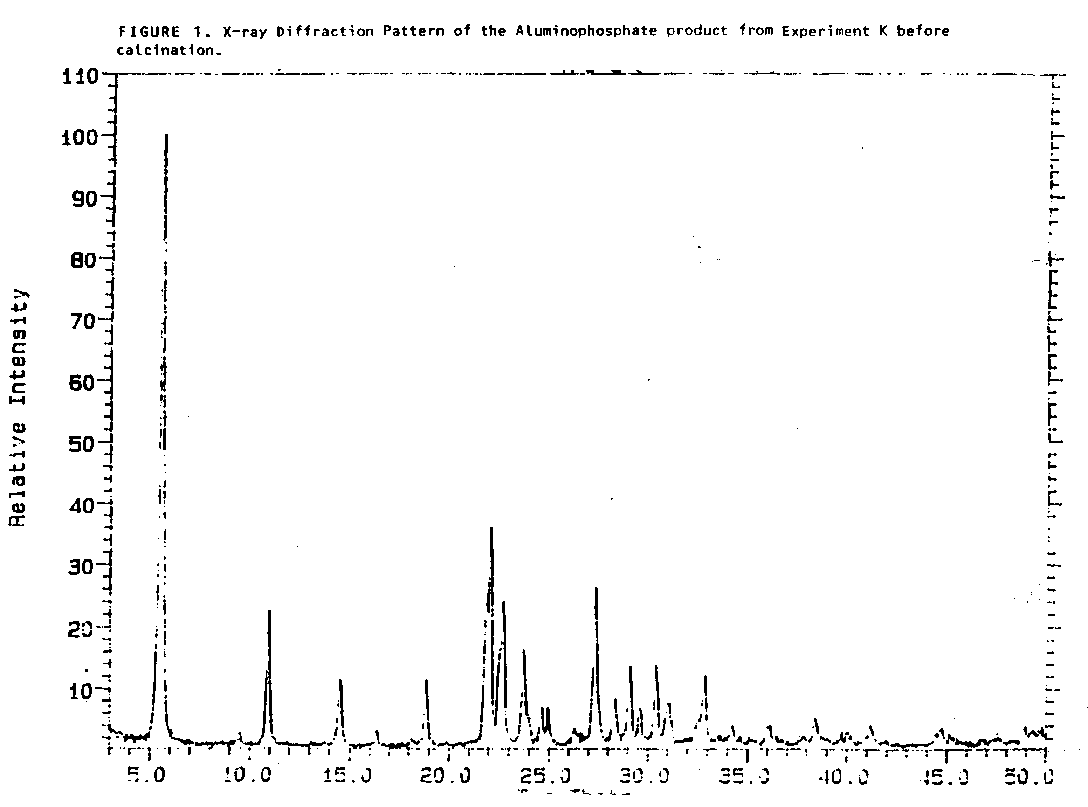

6.47 g of $Al_2O_3$ (pseudoboehmite) was mixed with 18g of $H_2O$ and then added to 10.8 g of 85 wt% $H_3PO_4$ diluted with 10 g $H_2O$. The resulting slurry was mixed at room temperature for 2 hours. 0.285 g tetramethylammoniumhydroxide (25 wt%) was added to 4.74 g di-n-propylamine. This organic mixture was added to the aluminophosphate gel then mixed at room temperature for 2 hours. The gel was loaded into a Teflon-lined autoclave and crystallized for 4 hours at 142°C. A typical X-ray diffraction pattern (from Experiment K in Table 2) is shown in Figure 1.

The above procedure was repeated while varying the composition of the directing agent (DA) by substituting different amines and quaternary nitrogen compounds. The molar ratio of quaternary nitrogen compound to amine was also varied. These runs are summarized in Table 2 and show that a quaternary nitrogen compound to amine ratio less than 0.0125 is not sufficient to prevent decomposition of the product in the mother liquor.

## EXAMPLE 2

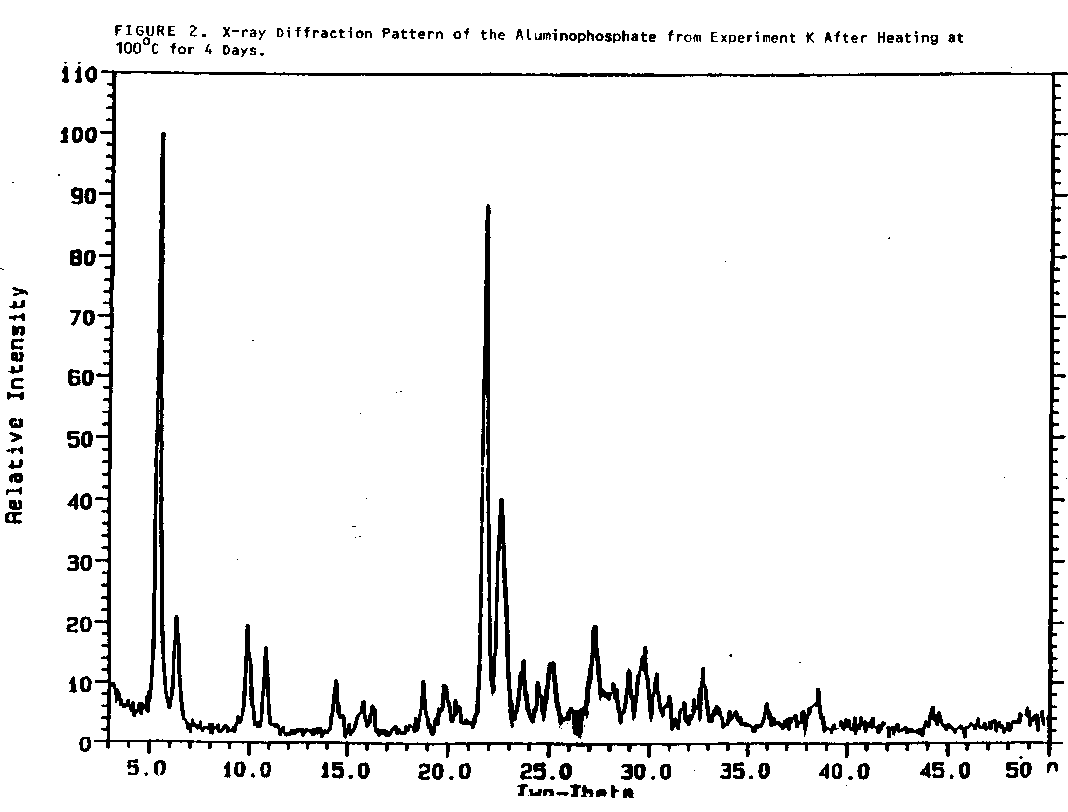

The product of Experiment K in Table 2 was heated in a convection oven at 100°C for 4 days. The X-ray diffraction pattern, depicted in Figure 2 showed a trace of $AlPO_4$-8. In contrast, the crystalline composition of comparative Experiment A which utilized a single amine as directing agent decomposed to an undescriptive solid after 4 hours at 100°C. The product from Experiment C, a dual organic system, was also heated at 100°C for 4 hours; traces of $AlPO_4$ were also observed.

## EXAMPLE 3

A silicoaluminophosphate composition was prepared by adding 216 ml of $H_2O$ to 74.64 g pseudoboehmite and stirring. The resulting mixture was then added to a mixture of 120 ml $H_2O$ and 129.6g $H_3PO_4$ (85 wt%). 3.42 g of tetramethylammoniumhydroxide(TMAOH) (25 wt%) was added to 56.88 g of di-n-propylamine (DPA) to form the directing agent mixture having a molar ratio of quaternary nitrogen compound to amine of 0.17. The directing agent mixture was then added and the resulting mixture stirred for 1.5 hours. 33.7 g fumed $SiO_2$ were then added resulting in the formation of a thick gel which was heated at 142°C for 4 hours to provide a silicoaluminophosphate composition having the characteristic X-ray diffraction pattern of Table 1A.

## TABLE 2

| EXPER-IMENT | $R_1$ | : | $R_2$ | ADDITIONAL RESULT | OBSERVATIONS |
|---|---|---|---|---|---|
| A | DPA | - | | * | |
| B | DPA | 1/40 | TMA | unknown x-ray pattern | |
| C | DPA | 1/60 | TMA | * | |
| D | DPA | 1/80 | TMA | * | stable in mother liquor longer than A or E |
| E | DPA | 1/100 | TMA | * | decomposed in mother liquor |
| F | DPA | 1/60 | TEA | * + $AlPO_4$-11 | |
| G | DPA | 1/60 | TPA | * | |
| H | DPA | 1/60 | TBA | * | |
| I | DPentA | 1/60 | TMA | * + amorphous impurities | |
| J | TEOA | 1/60 | TMA | * + $AlPO_4$-5 | |
| K | TIPOA | 1/60 | TMA | * | |
| L | DPA | 1/60 | TMA | Si-* (added 0.3 $SiO_2$ to gel before heating) | |

| | | | |
|---|---|---|---|
| DPA: | dipropylamine | TBA: | tetrabutylammonium |
| TMA: | tetramethylammonium | DPentA: | dipentylamine |
| TEA: | tetraethylammonium | TEOA: | triethanolamine |
| TPA: | tetrapropylammonium | TIPOA: | triisopropanolamine |

) * = aluminophosphate composition having x-ray diffraction characteristics of Table 1A

## EXAMPLE 4

Experiments M through V were carried out by the following procedure. A pseudo-boehmite/$H_2O$ slurry was mixed with an aqueous phosphorus source, $H_3PO_4$ (85 wt%) at 25-100°C for 0-5 hours until a gel with smooth consistency was obtained. The amine and quaternary nitrogen compound were mixed in the proportions indicated in Table 3, and then added to the $Al_2O_3/P_2O_5/H_2O$ slurry and stirred for 0-5 hours at room temperature. Boron was added as boron oxide either (i) to the pseudo-boehmite, (ii) just before heating the gel, or (iii) half to the pseudo-boehmite and half just before heating the gel. Optionally silica was added as colloidal silica, fumed silica or precipitated silica just before heating the gel. The gel was then crystallized in an autoclave at 130-150°C for 1 to 500 hours and the X-ray diffraction pattern of the resulting product were obtained.

A summary of experiments M through V is set out in Table 3. The data show that complete substitution of $B_2O_3$ for $Al_2O_3$ (Experiment P) failed to yield any solid product. Substitution of 60 mole% $Al_2O_3$ with $B_2O_3$ (Experiment V) resulted in a dense phase material. Figure 3 shows the solid state $^{11}$B NMR spectrum for the product from Experiment Q. The majority of boron is tetrahedrally coordinated with an $^{11}$B NMR shift of -0.97ppm. BA-PO-5 has an $^{11}$B NMR shift of -1.1ppm according to Appleyard et al., Zeolites 6, 428, 1986 which indicates that tetrahedrally coordinated boron is located within the framework of the metalloaluminophosphate product of Experiment Q.

**TABLE 3:**

GEL COMPOSITION: $R_1$ . $R_2$ . $x$ $Al_2O_3$ . $P_2O_5$ . $y$ $B_2O_3$ . 40 $H_2O$

| EXPERIMENT | $R_1$* | $R_2$* | $x$ | $y$ | MIXING ORDER | RESULT |
|---|---|---|---|---|---|---|
| M | DPA | – | 1.0 | 0.1 | I | MAPO + trace $AlPO_4$-11 |
| N | DPA | – | 0.9 | 0.1 | II | MAPO + trace $AlPO_4$-11 |
| O | DPA | – | 0.9 | 0.1 | I | MAPO + small amt $AlPO_4$-11 |
| P | DPA | – | 0.0 | 1.0 | II | No solid collected |
| Q | DPA | 1/60 TMA | 0.9 | 0.2 | III | Si-B ALPO-5 + trace SAPO-11 (0.3 $SiO_2$ added after addition of final $B_2O_3$) |
| R | DPA | 1/60 TMA | 0.9 | 0.1 | I | MAPO + $AlPO_4$-11 |
| S | DPA | 1/60 TMA | 0.9 | 0.1 | II | MAPO + small amt of H3 (heated for 6 hrs) |
| T | DPA | 1/60 TMA | 0.8 | 0.4 | III | MAPO + trace $AlPO_4$-11 |
| U | DPA | 1/60 TMA | 0.6 | 0.4 | II | MAPO + trace $AlPO_4$-11 |
| V | DPA | 1/60 TMA | 0.4 | 0.6 | II | unknown (probably dense phase) |

**\*\*Mixing Order:**

I:    $B_2O_3$ added just before heating gel
II:   $B_2O_3$ added to $Al_2O_3$
III:  1/2 $B_2O_3$ as with I and 1/2 $B_2O_3$ as with II
*DPA:  dipropylamine
 TMA:  tetramethylammonium
MAPO = Metalloaluminophosphate (containing framework boron) having the X-ray diffraction characteristics of Table 1A.

## Claims

1. A method for synthesizing a porous aluminophosphate composition having, after heating at 110°C, an X-ray diffraction pattern with lines shown in Table 1A of the specification, the method comprising forming an aqueous reaction mixture containing sources of aluminum oxide, phosphorus oxide, and a directing agent (DA) which contains at least one quaternary nitrogen compound and at least one amine in a molar ratio of total quaternary nitrogen compound to total amine ranging from 0.01 to 0.025, and which has a composition, in terms of mole ratios, within the following ranges:

   | | |
   |---|---|
   | $P_2O_5/Al_2O_3$ | 0.5 to 1.25 |
   | $H_2O/Al_2O_3$ | 10 to 100 |
   | $DA/Al_2O_3$ | 0.2 to 1.5 |

   and crystallizing the mixture to form said aluminophosphate composition.

2. The method of claim 1 wherein said mixture has the following composition ranges:

   | | |
   |---|---|
   | $P_2O_5/Al_2O_3$ | 0.9 to 1.1 |
   | $H_2O/Al_2O_3$ | 20 to 80 |
   | $DA/Al_2O_3$ | 0.2 to 0.8 |

   and wherein said molar ratio of quaternary nitrogen compound to amine ranges from 0.010 to 0.015.

3. The method of claim 1 wherein said mixture has the following composition ranges:

   | | |
   |---|---|
   | $P_2O_5/Al_2O_3$ | 0.9 to 1.1 |
   | $H_2O/Al_2O_3$ | 30 to 60 |
   | $DA/Al_2O_3$ | 0.3 to 0.7 |

   and wherein said molar ratio of quaternary nitrogen compound to amine ranges from 0.012 to 0.014.

4. The method of any preceding claim wherein the reaction mixture also contains a source of silica such that the $SiO_2/Al_2O_3$ ratio of the mixture is less than or equal to 1.

5. The method of claim 1, wherein said reaction mixture also contains at least one metal, M, other than silicon alone such that the $M/Al_2O_3$ of the mixture is 0.01 to 0.4.

6. The method of claim 5, wherein said mixture has the following composition ranges:

   | | |
   |---|---|
   | $M/Al_2O_3$ | 0.01 to 0.2 |
   | $P_2O_5/Al_2O_3$ | 0.9 to 1.1 |
   | $H_2O/Al_2O_3$ | 30 to 80 |
   | $DA/Al_2O_3$ | 0.9 to 1.1 |

   and wherein said molar ratio of total quaternary nitrogen compound to total amine ranges from 0.010 to 0.020.

7. The method of claim 5 wherein said mixture has the following composition ranges:

   | | |
   |---|---|
   | $M/Al_2O_3$ | 0.01 to 0.1 |
   | $P_2O_5/Al_2O_3$ | 0.9 to 1.1 |
   | $H_2O/Al_2O_3$ | 35 to 60 |
   | $DA/Al_2O_3$ | 0.9 to 1.1 |

   and wherein said molar ratio of quaternary nitrogen compound to amine ranges from from 0.015 to 0.018.

8. The method of any preceding claim wherein said X-ray diffraction pattern has the lines shown in Table 1B.

9. the method of any preceding claim wherein said X-ray diffraction pattern has the lines shown in Table 1C.

10. The method of any preceding claim wherein said amines are selected from the group consisting of mono-, di-, tri- or polyamines and said quaternary nitrogen compounds are ammonium compounds having the formula:

   $$R_4N^+X^-$$

   wherein R is alkyl of from 1 to 20 carbon atoms, heteroalkyl of from 1 to 20 atoms, aryl, heteroaryl, cycloalkyl of from 3 to 6 carbon atoms, cycloheteroalkyl of from 3 to 6 carbon atoms, or combinations thereof; and X is an anion.

11. The method of claim 10 wherein said amines are selected from the group consisting of alkylamines wherein alkyl is of 1 to 5 carbon atoms and trialkanolamines and said quaternary nitrogen compounds are ammonium compounds having the formula:

$$R_4N^+X^-$$

wherein R is alkyl of from 1 to 4 carbon atoms and X is halide or hydroxide.

12. The method of claim 11 wherein said amines are selected from the group consisting of di-n-propylamine, di-isopropylamine, di-n-pentylamine, di-isopentylamine, di-n-pentylamine, tri-n-butylamine, tri-n-pentylamine, triethanolamine and tri-isopropanolamine and said quaternary nitrogen compounds are selected from the group consisting of tetramethylammonium, tetraethylammonium, tetrapropylammonium and tetrabutylammonium.

FIGURE 1. X-ray Diffraction Pattern of the Aluminophosphate product from Experiment K before calcination.

FIGURE 2. X-ray Diffraction Pattern of the Aluminophosphate from Experiment K After Heating at 100°C for 4 Days.